**Europäisches Patentamt**

**European Patent Office**

**Office européen des brevets**

(11) Veröffentlichungsnummer: **0 297 481 B1**

# EUROPÄISCHE PATENTSCHRIFT

(45) Veröffentlichungstag der Patentschrift: **11.12.91**

(51) Int. Cl.5: **G06F 13/12**

(21) Anmeldenummer: **88110210.7**

(22) Anmeldetag: **27.06.88**

(54) **Ein-/Ausgabeleitungssystem für Datenverarbeitungsanlagen mit mehreren daran angeschlossenen Ein-/Ausgabeeinheiten.**

(30) Priorität: **30.06.87 DE 3721601**

(43) Veröffentlichungstag der Anmeldung:
**04.01.89 Patentblatt 89/01**

(45) Bekanntmachung des Hinweises auf die
Patenterteilung:
**11.12.91 Patentblatt 91/50**

(84) Benannte Vertragsstaaten:
**AT BE CH DE FR GB IT LI NL SE**

(56) Entgegenhaltungen:
**EP-A- 0 056 078**
**EP-A- 0 156 989**
**US-A- 3 623 011**
**US-A- 3 833 930**

**IBM TECHNICAL DISCLOSURE BULLETIN,
Band 27, Nr. 9, Februar 1985, Seiten
5425-5426, New York, US; T.A. KRIZ et al.:
"Multiprocessor distributed system bus
structure"**

(73) Patentinhaber: **Siemens Nixdorf Informationssysteme AG**
**Otto-Hahn-Ring 6**
**W-8000 München 83(DE)**

(72) Erfinder: **Backhaus, Werner**
**Aidenbach-Strasse 96**
**W-8000 München 70(DE)**
Erfinder: **Dietl, Erich**
**Am Graspoint 24**
**W-8200 Rosenheim(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft ein Ein-/Ausgabeleitungssystem für Datenverabeitungsanlagen mit mehreren daran angeschlossenen Ein-/Ausgabeeinheiten entsprechend dem Oberbegriff des Patentanspruches 1.

Eine derartige Anordnung ist beispielsweise aus der EP-A1-0156989 bekannt, wobei das Leitungssystem in an sich bekannter Weise ausgebildet sein kann und den gesamten Informationsaustausch zwischen den einzelnen erreichbaren Einheiten abwickelt.

Das Ein-/Ausgabeleitungssystem dient dabei in erster Linie der Übertragung von Daten zwischen dem Hauptspeicher und den über die Ein-/Ausgabeeinheiten erreichbaren peripheren Geräten in der einen oder anderen Richtung. Derartige Datenübertragungen oder -transfers werden in der Regel durch in vom Zentralprozessor der Datenverarbeitungsanlage zu bearbeitenden Programmen enthaltenen Ein-/Ausgabebefehle ausgelöst. Nach Entschlüsselung derartiger Befehle werden dann die notwendigen Steuerdaten einschließlich der Startadresse für das jeweilige Kanalprogramm im Hauptspeicher bereitgestellt und das Ein-/Ausgabesystem über das Vorliegen des Auftrages informiert. Nachfolgend wird dann vom Ein-/Ausgabeprozessor unterstützt das eigentliche Kanalprogramm anhand der bereitgestellten Steuerdaten von der zuständigen Ein-/Ausgabeeinheit abgearbeitet.

Arbeiten die Ein-/Ausgabeeinheiten wie bei der bekannten Anordnung weitgehend selbständig, indem sie lediglich für die Einleitung und den Abschluß übertragener Ein-/Ausgabeaufträge mit dem unterstützenden Prozessor in Verbindung treten, dagegen die notwendig werdenden Datentransfers zwischen peripherem Gerät und dem Hauptspeicher einschließlich Befehlskettung, Datenkettung und Erzeugung der Abschlußinformation selbsttätig abwickeln, dann beschränkt sich der Informationsaustausch zwischen dem unterstützenden Ein-/Ausgabeprozessor und den einzelnen Ein-/Ausgabeeinheiten im wesentlichen auf den Austausch von kurzen Steuerinformationen. Dies gilt insbesondere, wenn, wie bei der bekannten Anordnung, die für das Abholen der notwendigen Steuerinformationen und Daten benötigten Speicheradressen vom Ein-/Ausgabeprozessor aufbereitet, von einer gesonderten Adressensteuerungseinheit am Ein-/Ausgabeleitungssystem bereitgestellt werden.

Anforderungen auf Durchführung einer Informations- oder Datenübertragung werden dabei in einheitlicher Weise von allen Einheiten des Ein-/Ausgabeleitungssystems an eine zentrale Steuereinheit des Leitungssystems gerichtet, die das Leitungssystem der Reihe nach für die gewünschten Übertragungen zur Verfügung stellt, beispielsweise derart, daß entsprechend der DE-A1-30 48 417 der jeweils anfordernden Einheit die Sendeberechtigung erteilt und eine bereitgestellte Steuerinformation mit Adressenteil an alle übrigen Einheiten des Leitungssystems übertragen wird. Anhand des Adressenteils der Steuerinformation überprüft dann jede empfangende Einheit, ob sie als Partner für den Informationsaustausch gesucht wird, wobei die weitere Steuerinformation Aufschluß darüber gibt, ob Daten empfangen oder abgerufen werden sollen.

Statt der Auswertung der Steuerinformation durch alle Einheiten des Leitungssystems, kann diese Auswertung zunächst allein von der zentralen Steuereinheit vorgenommen werden, die dann anhand des Adressenteiles die als Partner gewünschte Einheit für den Empfang der Steuerinformation gezielt frei gibt und so die Verbindungsherstellung steuert.

Diese einheitliche Steuerung des gesamten Verkehrs über das gemeinsame Leitungssystem, gleichgültig ob Daten zwischen dem Hauptspeicher und den Ein-/Ausgabeeinheiten in der einen oder anderen Richtung oder aber nur kurze Steuerinformationen zwischen dem Ein-/Ausgabeprozessor und den Ein-/Ausgabeeinheiten zu übertragen sind, ist insofern von Nachteil, da dringende Steuerinformationen vielfach nicht sofort abgesetzt werden können und andererseits die reine Datenübertragungsleistung dadurch beeinträchtigt wird.

Es ist daher Aufgabe der Erfindung, ausgehend von Anordnungen der eingangs genannten Art das Ein-/Ausgabeleitungssystem so auszubilden, daß es insgesamt die anfallenden Aufgaben der Datenübertragung und des Steuerinformationsaustausches besser bewältigen kann und somit effektiver arbeitet.

Diese Aufgabe wird gemäß der Erfindung durch die kennzeichnenden Merkmale des Patentanspruches 1 gelöst.

Danach ist neben dem üblichen Leitungssystem ein gesondertes Leitungssystem vorgesehen, das lediglich den Ein-/Ausgabeprozessor mit den Ein-/Ausgabeeinheiten verbindet und über das der Prozessor an die jeweils auszuwählende Ein-/Ausgabeeinheit eine kurze Steuerinformation übergeben kann, wenn dieses notwendig ist und von der ausgewählten Ein-/Ausgabeeinheit eine vorbestimmte Reaktion erforderlich wird. Die Steuerinformationen für die einzelnen Ein-/Ausgabeeinheiten können dabei unmittelbar, wenn sie anfallen, abgesetzt werden, da der Ein-/Ausgabeprozessor sich wegen der Zuteilung des Übertragungsweges nicht an die zentrale Steuereinheit des gemeinsamen Leitungssystems zu wenden braucht. Im Störungsfalle können die Ein-/Ausgabeeinheiten somit schneller zu Reaktionen veranlaßt werden. Außerdem wird das gemeinsame Leitungssystem von Übertragungsanforderungen mit geringer Übertragungsleistung im Vergleich zu den Übertragungsleistungen beim reinen Datenverkehr, bei dem eine Anforderung die Übertragung mehrerer Dateneinheiten umfaßt, entlastet, so daß insgesamt die Datenübertragungsleistung gesteigert wird.

Der Aufwand für das gesonderte Informationsleitungssystem und dessen Steuerung ist bei einer Ausbildung gemäß Patentanspruch 2 verhältnismäßig gering und die Informationsübernahme durch das Zusammenwirken einer gemeinsamen Steuerleitung mit den individuellen Auswahlleitungen für die einzelnen Ein-/Ausgabeeinheiten einfach zu steuern. Letzteres eröffnet gemäß Patentanspruch 3 zugleich die Möglichkeit, die Auswahlleitungen in Gegenrichtung für die Übertragung eines die Empfangsbereitschaft der jeweiligen Ein-/Ausgabeeinheit kennzeichnenden Signales zu nutzen.

Weiterhin können gemäß Patentanspruch 4 in einfacher Weise gleichzeitig mehrere Ein-/Ausgabeeinheiten für die Übernahme derselben Steuerinformation ausgewählt werden, so daß zum Beispiel im Störungsfall alle ausgewählten Ein-/Ausgabeeinheiten gleichzeitig angehalten oder zurückgesetzt werden können.

Schließlich kann gemäß Patentanspruch 5 durch eine zusätzliche Steuerleitung die Möglichkeit zur Quittierung einer durch eine Steuerinformation veranlaßten Reaktion geschaffen werden.

Einzelheiten der Erfindung seien nachfolgend anhand eines in der Zeichnung dargestellten Ausführungsbeispieles näher erläutert. Im einzelnen zeigen

FIG 1    ein Blockschaltbild einer Datenverarbeitungsanlage mit einem Ein-/Ausgabeleitungssystem gemäß der Erfindung,

FIG 2    ein Blockschaltbild zur Erläuterung der Zusammenarbeit zwischen dem Ein-/Ausgabeprozessor und einer der Ein-/Ausgabeeinheiten und

FIG 3    ein dazugehöriges Impulsdiagramm.

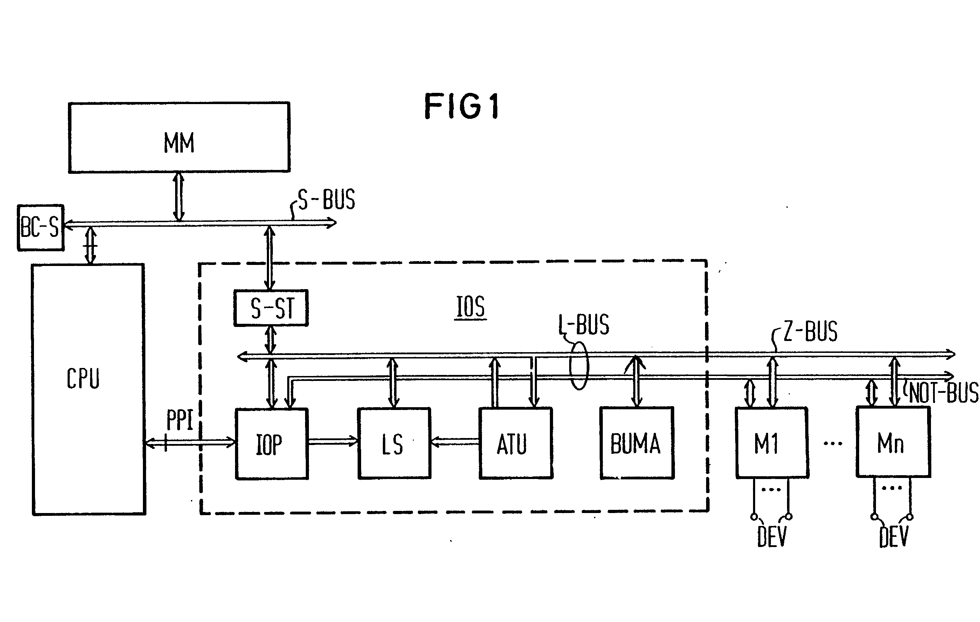

Die in FIG 1 gezeigte Datenverarbeitungsanlage besteht in herkömmlicher Weise aus einem Hauptspeicher MM mit Zugriffsteuerung, zum Beispiel einem Speicherleitungssystem S-BUS mit Zuteilungssteuerung BC-S, an die über Schnittstellensteuerungen S-ST ein Zentralprozessor CPU und ein Ein-/Ausgabesystem IOS angeschlossen ist. Letzteres besteht entsprechend der EP-A1-0156989 zum Beispiel aus einem Ein-/Ausgabeprozessor IOP und einem Ein-/Ausgabeleitungssystem L-BUS, an das mehrere Ein-/Ausgabeeinheiten, zum Beispiel Mn, zur Ansteuerung peripherer Geräte DEV angeschlossen sind. Neben dem Ein-/Ausgabeprozessor IOP ist innerhalb des Ein-/Ausgabesystem IOS ein lokaler Speicher LS und eine Adressensteuereinheit ATU vorgesehen, die gleichfalls als selbständige Einheiten an das Ein-/Ausgabeleitungssystem L-BUS angeschlossen sind, wobei der lokale Speicher LS einen Teil der normalerweise in Übergabebereichen des Hauptspeichers MM abgelegten Steuerdaten für die einzelnen Ein-/Ausgabeaufträge gespeichert enthält und die Adressensteuereinheit ATU vom Ein-/Ausgabeprozessor IOP bereitgestellte Speicheradressen liefert, worauf aber im Zusammenhang mit der vorliegenden Erfindung nicht näher eingegangen zu werden braucht.

Gemäß der Erfindung ist das Ein-/Ausgabeleitungssystem L-BUS in zwei getrennte Leitungssysteme unterteilt, nämlich in ein Datenleitungssystem Z-BUS und in ein Informationsleitungssystem NOT-BUS. An das zuerst genannte Leitungssystem sind alle Einheiten des Ein-/Ausgabesystems IOS und die Ein-/Ausgabeeinheiten Mn angeschlossen. Dieses Leitungssystem wird in herkömmlicher Weise durch die zentrale Steuereinheit BUMA überwacht und gesteuert, die im vorliegenden Falle in das Ein-/Ausgabesystem IOS einbezogen ist. Außerdem hat das Leitungssystem Z-BUS über die Schnittstellensteuerung S-ST und das Speicherleitungssystem S-BUS direkten Zugriff zum Hauptspeicher MM, so daß die Ein-/Ausgabeeinheiten Mn Zugriffe zum Hauptspeicher MM mit Hilfe der Adressensteuereinheit ATU weitgehend selbständig ausführen können.

Das Informationsleitungssystem NOT-BUS verbindet dagegen den Ein-/Ausgabeprozessor IOP lediglich mit allen Ein-/Ausgabeeinheiten Mn, um unabhängig vom Datenleitungssystem Z-BUS kurze Steuerinformationen unmittelbar an die jeweils betroffene Ein-/Ausgabeeinheit übermitteln zu können, die diese dann zu vorgegebenen Reaktionen veranlassen. Es handelt sich hierbei in erster Linie um folgende Steuerinformationen:

1. Mitteilungen, daß im zugehörigen Übergabebereich des Speichers ein Ein-/Ausgabebefehl abzurufen und ein entsprechender Auftrag auszuführen ist.

2. Mitteilungen, daß der Auftrag nach einer Rückmeldung weitergeführt werden kann oder zu unterbrechen ist.

3. Mitteilungen, daß die Ein-/Ausgabeeinheit oder ein angeschlossener Kanal zurückzusetzen ist, d.h. in einen normierten Zustand zu bringen ist, oder der HALT- oder STOP-Zustand einzunehmen ist.

4. Mitteilungen, daß ein wegen noch nicht vorliegender Adresse von der Adressensteuereinheit ATU abgewiesener Speicherzugriff jetzt möglich ist.

5. Mitteilungen, die Ein-/Ausgabeeinheiten zu sperren oder zu entsperren, einen Wartezustand einzunehmen oder aufzuheben, Fehlersimulationen durchzuführen oder Zustandsinformationen zu übertragen.

6. Mitteilungen, daß in der Ein-/Ausgabeeinheit ein Fehler aufgetreten ist, der zu behandeln ist, oder daß das Datenleitungssystem Z-BUS fehlerhaft arbeitet.

Bei den meisten dieser Steuerinformationen ist dann über das Datenleitungssystem Z-BUS eine Rückfrage in den zuständigen Speicherbereichen des lokalen Speichers LS bzw. des Hauptspeichers MM notwendig, um Steuerinformationen über den weiteren Arbeitsablauf für die getroffene Ein-/Ausgabeeinheit zu erhalten.

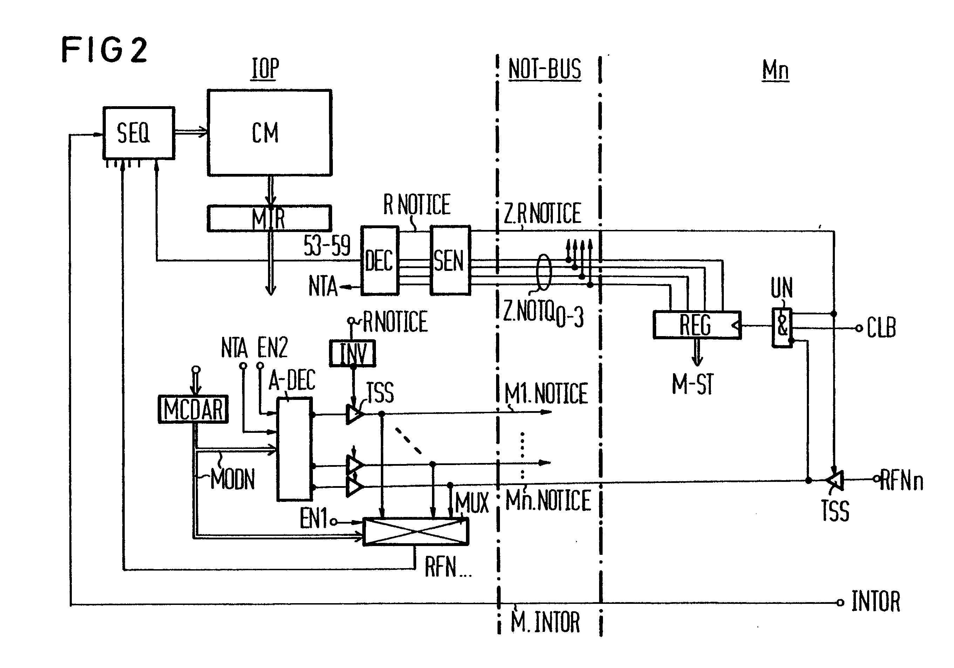

FIG 2 zeigt Teile des Ein-/Ausgabeprozessors IOP und eine der Ein-/Ausgabeeinheiten Mn mit den für die weitere Erläuterung der Erfindung notwendigen Steuer- und Informationsleitungen des Informationsleitungssystems NOT-BUS. Dieses Leitungssystem umfaßt zum Beispiel vier Informationsleitungen Z.NOTQ0 bis Z.NOTQ3, auf denen die jeweilige Steuerinformation verschlüsselt übertragen wird, sowie für jede angeschlossene Ein-/Ausgabeeinheit eine individuelle Auswahlleitung, zum Beispiel Mn.NOTICE für die Ein-/Ausgabeeinheit Mn, und eine gemeinsame Steuerleitung Z.RNOTICE, die jeweils in Verbindung mit der aktivierten Auswahlleitung, zum Beispiel Mn.NOTICE, die Übernahme der auf den Informationsleitungen Z.NOTQ.. bereitgestellten Steuerinformation in der jeweils ausgewählten Ein-/Ausgabeeinheit, zum Beispiel Mn, bewirkt.

Die jeweilige Steuerinformation ist beispielsweise als Subfunktion in den aus dem Mikroprogrammspeicher CM des Ein-/Ausgabeprozessors IOP durch die Adressenfolgesteuerung SEQ jeweils in das Befehlsregister MIR gelesenen Mikrobefehlen enthalten. Es sind zum Beispiel die Bits 53 bis 59 des Mikrobefehls, die einem Subfunktionsdecoder DEC zugeleitet werden, der dann bei einem vorliegenden Informationsauftrag ein Steuersignal RNOTICE für die gemeinsame Steuerleitung Z.RNOTICE und die Signale für die Informationsleitungen Z.NOTQ.. des Informationsleitungssystems NOT-BUS erzeugt, die dann über den Sendeverstärker SEN weitergeleitet werden.

Die Informationen für die jeweils zu aktivierende Auswahlleitung, zum Beispiel Mn.NOTICE, werden von einem Register MCDAR im Ein-/Ausgabeprozessor IOP abgeleitet, das die Adresse MODN der jeweiligen Ein-/Ausgabeeinheit gespeichert enthält, für die der Ein-/Ausgabeprozessor IOP gerade ein Programm bearbeitet. Diese Adresse MODN wird einem Adressendecodierer A-DEC zugeleitet, der bei seinem Wirksamschalten mit dem internen Steuersignal EN2 ein Steuersignal über einen Sendeverstärker TSS auf die Auswahlleitung für die ausgewählte Ein-/Ausgabeeinheit gibt. Dieses Steuersignal schaltet in der ausgewählten Ein-/Ausgabeeinheit ein UND-Glied UN für das gleichzeitig wirksame Steuersignal auf der gemeinsamen Steuerleitung Z.RNOTICE frei, so daß in Verbindung mit einem zur Verfügung stehenden Taktimpuls CLB ein Übernahmeimpuls für das an die Informationsleitungen Z.NOTQ... angeschlossene Empfangsregister REG ausgelöst wird, von dem die übernommene Steuerinformation dann an die interne Steuerung M-ST der Ein-/Ausgabeeinheit zur Ausführung weitergeleitet wird.

Enthält die im Mikrobefehl enthaltene Subfunktion eine Angabe, daß dieselbe Steuerinformation gleichzeitig beispielsweise an alle erreichbaren Ein-/Ausgabeeinheiten M... weiterleitet werden soll, weil zum Beispiel das Datenleitungssystem Z-BUS fehlerhaft arbeitet, dann erzeugt der Subfunktionsdecodierer DEC zusätzlich ein Signal NTA, das den Adressendecoder A-DEC unabhängig von der entstehenden Einheitenadresse MODN veranlaßt, alle Auswahlleitungen M1.NOTICE bis Mn.NOTICE gleichzeitig zu aktivieren. In analoger Weise können die Auswahlleitungen zu gleichartigen Ein-/Ausgabeeinheiten bei verschiedenen Gruppen von Ein-/Ausgabeeinheiten gleichzeitig aktiviert werden.

Beim gewählten Ausführungsbeispiel werden die Auswahlleitungen M1.NOTICE bis Mn.NOTICE in beiden Richtungen zur Signalübertragung benutzt. Zu diesem Zweck sind die Sendeverstärker TSS im Ein-/Ausgabeprozessor IOP als Tristate-Sendeschalter ausgebildet, und am anderen Ende jeder Auswahlleitung ist ebenfalls ein Tristate-Sendeschalter TSS vorgesehen, dem ebenfalls ein zu übertragendes Signal, z.B.RFNn, zugeführt werden kann. Damit sich dabei die Übertragungen in beiden Richtungen nicht gegenseitig stören, werden diese Tristate-Sendeschalter TSS abhängig vom gemeinsamen Steuersignal RNOTICE wechselseitig hochohmig geschaltet. Zu diesem Zweck ist das Signal RNOTICE im Ein-/Ausgabeprozessor IOP über einen Inverter INV geführt, so daß beim Signal RNOTICE = 0 der Ein-/Ausgabeprozessor IOP als Empfänger und die Ein-/Ausgabeeinheiten als Sender arbeiten, während beim Signal RNOTICE = 1 der Ein-/Ausgabeprozessor zum Sender und die Ein-/Ausgabeeinheiten zum Empfänger werden.

Um das von den Ein-/Ausgabeeinheiten M... ausgesandte Signal, zum Beispiel RFNn, im Ein-/Ausgabeprozessor IOP auswerten zu können, ist an alle Auswahlleitungen ein Auswahlschalter MUX angeschlossen, der abhängig von der Einheitenadresse MODN aus dem Register MCDAR einstellbar ist und mit dem internen Steuersignal EN1 jeweils wirksam geschaltet wird. Das Signal RFN der ausgewählten Auswahlleitung, zum Beispiel Mn.NOTICE, wird dann der Adressenfolgesteuereinrichtung SEQ zugeführt, die davon abhängig die Adressenauswahl für den Mikrobefehlsspeicher CM steuert. Beispielsweise kann mit dem Signal RFN... die Empfangsbereitschaft der Ein-/Ausgabeeinheit für die Entgegennahme vorgegebener Steuerinformationn signalisiert und dies über den Auswahlschalter MUX vorher abgefragt werden.

Über die zusätzlich gezeigte gemeinsame Steuerleitung M.INTOR besteht weiterhin die Möglichkeit, daß die jeweils angesteuerte Ein-/Ausgabeeinheit M... vorgegebene Steuerinformationen nach Vollzug der damit verbundenen Reaktionen quittiert, was ebenfalls von der Adressenfolgesteuerung SEQ ausgewertet wird. Zum Beispiel kann ein Auftrag zum Übergang in den normierten Zustand nach Erreichen dieses Zustandes oder die Mitteilung zur Übernahme eines Ein-/Ausgabeauftrages quittiert werden, weil der weitere Steuerungsablauf vom Vollzug der durch die Steuerinformation bestimmten Reaktionen abhängig ist.

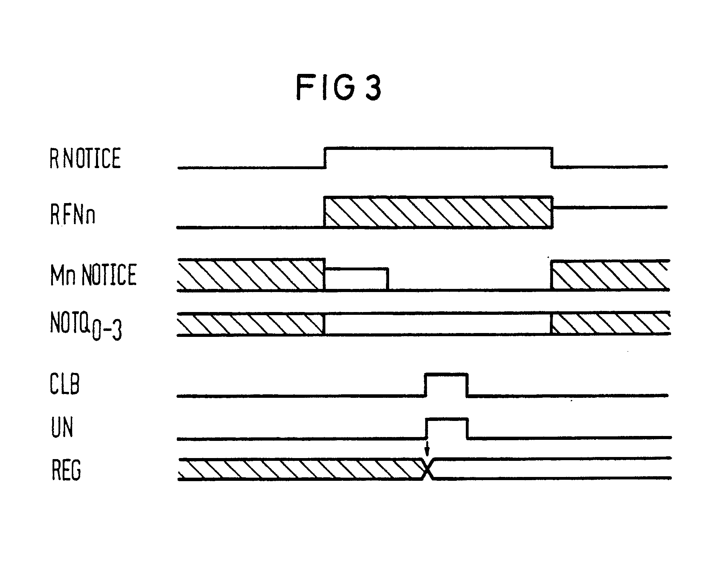

FIG 3 zeigt ein zugehöriges Impulsdiagramm. Das Signal RNOTICE ist zunächst auf logisch "0". Die Auswahlleitungen M1.NOTICE bis Mn.NOTICE sind daher auf der Seite des Ein-/Ausgabeprozessors IOP hochohmig geschaltet, so daß die Übertragung in Gegenrichtung für die Signale RFN.. freigegeben ist. Die Ein-/Ausgabeeinheit Mn zeigt mit RFNn = 0 die Empfangsbereitschaft an.

Zum Aussenden einer Steuerinformation an die Ein-/Ausgabeeinheit Mn wird das Signal RNOTICE auf logisch "1" umgeschaltet und damit die Übertragungsrichtung auf den Auswahlleitungen umgekehrt. Die Übertragung des Signals RFNn = 0 entfällt damit. Stattdessen sendet der Ein-/Ausgabeprozessor IOP auf allen Auswahlleitungen ein Signal logisch "1", das auf der ausgewählten Leitung Mn.NOTICE in logisch "0" übergeht und zusammen mit dem Taktimpuls CLB die Übernahme der auf den Informationsleitungen Z.NOTQ... anstehenden gültigen Steuerinformation bewirkt. Danach wird durch Umkehr der Übertragungsrichtung auf den Auswahlleitungen M...NOTICE die Übertragung der Steuerinformation wieder beendet.

## Patentansprüche

1. Ein-/Ausgabeleitungssystem (L-BUS) für Datenverarbeitungsanlagen mit mehreren daran angeschlossenen Ein-/Ausgabeeinheiten (M1 bis Mn) zur Durchführung von Datenübertragungen zwischen an die Ein-/Ausgabeeinheiten (M1 bis Mn) angeschlossenen peripheren Geräten (DEV) und dem über das Leitungssystem im direkten Zugriff erreichbaren Hauptspeicher (MM) der Datenverarbeitungsanlage in Verbindung mit einem die Ausführung der Ein-/Ausgabeoperationen unterstützenden und ebenfalls an das Leitungssystem angeschlossenen Ein-/Ausgabeprozessor (IOP), wobei Ein-/Ausgabeoperationen jeweils vom Ein-/Ausgabeprozessor (IOP) eingeleitet und damit verbundene Datenübertragungen von der jeweils betroffenen Ein-/Ausgabeeinheit (z.B. Mn) selbständig, ohne direkte Kommunikation zwischen Ein-/Ausgabeprozessor (IOP) und den Ein-/Ausgabeeinheiten (MI bis Mn) durchgeführt werden und wobei Anforderungen für die Übertragung von Steuerinformationen und Daten und die Durchschaltung der entsprechenden Verbindungswege durch eine weitere, mit dem Leitungssystem (L-BUS) gekoppelte Steuereinheit (BUMA) gesteuert werden, **dadurch gekennzeichnet,** daß das Leitungssystem (L-BUS) in zwei getrennte Leitungssysteme aufgeteilt ist, von denen das eine als Datenleitungssystem (Z-BUS) die Datenleitungen für die Übertragung der Daten-, Parameter- und Adressenwörter zur Abwicklung von Datenübertragungen zwischen den an das Ein-/Ausgabeleitungssystem (L-BUS) angeschlossenen Einheiten (IOP, M1 bis Mn) einschließlich des Hauptspeichers (MM) und die Steuerleitungen für die Anforderungsüberwachung, -abwicklung und die Wegesteuerung während der einzelnen Übertragungssequenzen durch die zugehörige zentrale Steuereinheit (BUMA) umfaßt, während das andere als Informationsleitungssystem (NOT-BUS) zwischen dem die Ausführung der Ein-/Ausgabeoperation unterstützenden Ein-/Ausgabeprozessor (IOP) des Ein-/Ausgabeleitungssystems und den Ein-/Ausgabeeinheiten (M1 bis Mn) zur direkten Übergabe von Steuerinformationen des Ein-/Ausgabeprozessors (IOP) an vorher ausgewählte Ein-/Ausgabeeinheiten (M1 bis Mn) dient, um diese zu vorbestimmten Reaktionen zu veranlassen.

2. Ein-/Ausgabeleitungssystem nach Anspruch 1, **dadurch gekennzeichnet,** daß das Informationsleitungssystem (NOT-BUS) neben Datenleitungen (Z.NOTQ0 bis Z.NOTQ3) für die jeweilige Steuerinformation jeweils eine individuelle Auswahlleitung (Mn.NOTICE) je Ein-/Ausgabeeinheit (Mn) und eine gemeinsame Steuerleitung (Z.RNOTICE) aufweist, die im Zusammenwirken mit der jeweils aktivierten Auswahlleitung (Mn.NOTICE) die Übernahme der auf den Datenleitungen (Z.NOTQ0 bis Z.NOTQ3) bereitstehenden Steuerinformation in der ausgewählten Ein-/Ausgabeeinheit (Mn) bewirkt.

3. Ein-/Ausgabeleitungssystem nach Anspruch 2, **dadurch gekennzeichnet,** daß die Auswahlleitungen (Mn.NOTICE) zur Übertragung eines die Empfangsbereitschaft der zugehörigen Ein-/Ausgabeeinheit (Mn) kennzeichnenden Steuersignals (RFNn) in Gegenrichtung zum Ein-/Ausgabeprozessor (IOP) abhängig vom Signalzustand der gemeinsamen Steuerleitung (Z.RNOTIC) umschaltbar sind und daß die beabsichtigte Übertragung einer Steuerinformation abhängig vom Vorliegen der Empfangsbereitschaft der anzusteuernden Ein-/Ausgabeeinheit (Mn) steuerbar ist.

4. Ein-/Ausgabeleitungssystem nach Anspruch 2 oder 3, **dadurch gekennzeichnet,** daß alle oder vorbestimmte Gruppen von Auswahlleitungen (M1.NOTICE bis Mn.NOTICE) gleichzeitig zur Übertragung derselben bereitgestellten Steuerinformation an mehrere oder alle ausgewählten Ein-/Ausgabeeinheiten aktivierbar sind.

5. Ein-/Ausgabeleitungssystem nach einem der Ansprüche 2 bis 4, **dadurch gekennzeichnet,** daß beim Informationsleitungssystem (NOT-BUS) zusätzlich eine gemeinsame Steuerleitung (M.INTOR) zur Übertragung eines Quittungssignals der jeweiligen Ein-/Ausgabeeinheit (z.B. Mn) nach Ausführung einer durch die empfangene Steuerinformation vorbestimmten Reaktion vorgesehen ist.

## Claims

1. Input/output bus system (L-BUS) for data processing systems having a plurality of input/output units (M1 to Mn), connected thereto, for making data transmissions between peripheral devices (DEV) connected to the input/output units (M1 to Mn) and the main memory (MM), which can be reached via the bus system in direct access, of the data processing system in conjunction with an input/output processor (IOP) which supports the execution of the input/output operations and is likewise connected to the bus system, input/output operations being initiated in each case by the input/output processor (IOP) and associated data transmissions from the respectively involved input/output unit (for example Mn) being carried out independently without direct communication between input/output processor (IOP) and the input/output units (M1 to Mn) and requests for the transmission of control information and data and the switching-through of the corresponding connection paths being controlled by a further control unit (BUMA) coupled to the bus system (L-BUS), characterised in that the bus system (L-BUS) is divided up into two separate bus systems, of which the one comprises as a data bus system (Z-BUS), the data lines for the transmission of the data words, parameter words and address words for processing data transmissions between the units (IOP, M1 to Mn), including the main memory (MM) connected to the input/output bus system (L-BUS) and the control lines for the request monitoring, request processing and the path control during the individual transmission sequences by means of the associated central control unit (BUMA), whilst the other bus system serves as an information bus system (NOT-BUS) between the input/output processor (IOP), which supports the execution of the input/output operation, of the input/output bus system and the input/output units (M1 to Mn) for the direct transfer of control information of the input/output processor (IOP) to previously selected input/output units (M1 to Mn) in order to bring about predetermined reactions from the latter.

2. Input/output bus system according to Claim 1, characterised in that the information bus system (NOT-BUS) has, in addition to data lines (Z.NOTQ0 to Z.NOTQ3) for the respective control information, in each case an individual selection line (Mn.NOTICE) per input/output unit (Mn) and a common control line (Z.RNOTICE) which, in conjunction with the respectively activated selection line (Mn.NOTICE) brings about the transfer into the selected input/output unit (Mn) of the control information available on the data lines (Z.NOTQ0 to Z.NOTQ3).

3. Input/output bus system according to Claim 2, characterised in that the selection lines (Mn.NOTICE) for transmitting a control signal (RFNn) which characterises the ready-to-receive state of the associated input/output unit (Mn) can be switched over in the opposite direction to the input/output processor (IOP) as a function of the signalling state of the common control line (Z.RNOTICE), and in that the intended transmission of an item of control information can be controlled as a function of the presence of the ready-to-receive state of the input/output unit (Mn) to be actuated.

4. Input/output bus system according to Claim 2 or 3, characterised in that all the selection lines (M1.NOTICE to Mn.NOTICE), or predetermined groups thereof, can be activated at the same time in order to transmit the same available item of control information to a plurality of, or all of, the selected input/output units.

5. Input/output bus system according to one of
Claims 2 to 4, characterised in that in addition
a common control line (M.INTOR) is provided
in the information bus system (NOT-BUS) in
order to transmit an acknowledgement signal
to the respective input/output unit (for example
Mn) after the execution of a reaction predetermined by the received item of control information.

**Revendications**

1. Système de conducteurs d'entrée/sortie (L-
BUS) auquel sont raccordées plusieurs unités
d'entrée/sortie (M1 à Mn) pour l'exécution de
la transmission de données entre des appareils
périphériques (DEV), raccordés aux unités
d'entrée/sortie (M1 à Mn), et la mémoire principale (MM), pouvant être atteinte par l'intermédiaire du système de conducteurs au
moyen d'un accès direct, de l'installation de
traitement de données, en liaison avec un processeur d'entrée/sortie (IOP), qui assiste l'exécution des opérations d'entrée/sortie et qui est
également raccordé au système de conducteurs, et dans lequel des opérations
d'entrée/sortie sont déclenchées respectivement par le processeur d'entrée/sortie (IOP), et
des transmissions de données, qui sont associées à ces opérations, sont exécutées par
l'unité d'entrée/sortie respectivement considérée (par exemple Mn) d'une manière automatique, c'est-à-dire sans communication directe
entre le processeur d'entrée/sortie (IOP) et les
unités d'entrée/sortie (M1 à Mn), et dans lequel des demandes de transmission d'informations de commande et de données et l'interconnexion directe des voies correspondantes
de communication sont commandées par une
autre unité de commande (BUMA) accouplée
au système de conducteurs (L-BUS), caractérisé par le fait que le système de conducteurs
(L-BUS) est subdivisé en deux systèmes séparés de conducteurs, dont l'un comprend les
conducteurs de transmission de données pour
la transmission des mots de données, de paramètres et d'adresses pour l'exécution de transmissions de données entre les unités (IOP,
M1 à Mn) raccordées au système de conducteurs d'entrée/sortie (L-BUS), y compris la mémoire principale (MM) des conducteurs de
commande pour le contrôle de l'exécution des
demandes et la commande des voies d'acheminement pendant les différentes séquences
de transmission, par l'unité centrale de commande associée (BUMA), tandis que l'autre
système de conducteurs est utilisé en tant que
système de conducteurs de transmission d'informations (NOT-BUS) entre le processeur
d'entrée/sortie (IOP), qui assiste à l'exécution
de l'opération d'entrée/sortie, du système de
conducteurs d'entrée/sortie et les unités
d'entrée/sortie (M1 à Mn) pour le transfert direct d'informations de commande du processeur d'entrée/sortie (IOP) à des unités
d'entrée/sortie (M1 à Mn) préalablement sélectionnées, afin d'amener ces unités à avoir des
réactions prédéterminées.

2. Système de conducteurs d'entrée/sortie suivant la revendication 1, caractérisé par le fait
que le système de conducteurs de transmission d'informations (NOT-BUS) comporte, en
dehors des conducteurs de transfert de données (Z.NOTQ0 à Z.NOTQ3) pour l'information
respective de commande, respectivement un
conducteur individuel de sélection
(Mn.NOTICE) pour chaque unité d'entrée/sortie
(Mn) et un conducteur commun de commande
(Z.RNOTICE), qui, en coopération avec le
conducteur de sélection (Mn.NOTICE) respectivement activé, déclenche le transfert de l'information de commande mise à disposition
dans les conducteurs de transmission de données (Z.NOTQ0 à Z.NOTQ3) dans l'unité
d'entrée/sortie (Mn) sélectionnée.

3. Système de conducteurs d'entrée/sortie suivant la revendication 2, caractérisé par le fait
que pour la transmission d'un signal de commande (RFNn) caractérisant l'état prêt à la
réception de l'unité d'entrée/sortie associée
(Mn), les conducteurs de sélection
(Mn.NOTICE) peuvent être commutés en sens
opposés du processeur d'entrée/sortie (IOP),
en fonction de l'état de signal présent dans la
ligne commune de commande (Z.RNOTIC), et
que la transmission envisagée d'une information de commande peut être commandée en
fonction de la présence de l'état prêt à la
réception de l'unité d'entrée/sortie (Mn) devant
être commandée.

4. Système de conducteurs d'entrée/sortie suivant la revendication 2 ou 3, caractérisé par le
fait que tous les groupes ou des groupes prédéterminés de conducteurs de sélection
(M1.NOTICE à Mn.NOTICE) peuvent être activés simultanément pour la transmission de la
même information de commande préparée, à
plusieurs ou à toutes les unités sélectionnées
d'entrée/sortie.

5. Système de conducteurs d'entrée/sortie suivant l'une des revendications 2 à 4, caractérisé
par le fait que dans le cas du système de conducteurs de transmission d'informations (NOT-BUS), il est prévu en supplément un conducteur commun de commande (M.INTOR) pour la transmission d'un signal d'accusé de réception à l'unité respective d'entrée/sortie (par exemple Mn) après l'exécution d'une réaction prédéterminée par l'information de commande reçue.

FIG 1

EP 0 297 481 B1

FIG 2

EP 0 297 481 B1

# FIG 3